# EUROPÄISCHE PATENTANMELDUNG

(11) **EP 4 789 956 A1**
(43) Veröffentlichungstag der Anmeldung: **12.08.2026**
(21) Anmeldenummer: 26156994.1
(22) Anmeldetag: 06.02.2026
(51) Int. Cl.: B62J 9/20, B62K 7/04

(54) **LASTAUFNAHMEVORRICHTUNG MIT VARIABLEM FASSUNGSVERMÖGEN, UND DAMIT AUSGESTATTETES LASTENFAHRRAD**

(30) Priorität: 07.02.2025 DE 202025100633 U
(71) Anmelder: AT Zweirad GmbH, 48341 Altenberge (DE)
(72) Erfinder:
(74) Vertreter: Patentanwälte Olbricht Buchhold Keulertz

(57) **Zusammenfassung**

Bei einer Lastaufnahmevorrichtung (1) für ein Lastenfahrrad (10), insbesondere für ein Lastenfahrrad (10) in Long-John-Bauweise, mit einem Bodenteil (2) und mit einer an das Bodenteil (2) anschließenden Wandung (3), derart, dass Bodenteil (2) und Wandung (3) einen Lastaufnahmeraum (LA) begrenzen, wird vorgeschlagen, dass das Bodenteil (2) einen ersten und einen zweiten Bodenteleskopschuss (20a, 20b) aufweist und die Wandung (3) einen ersten und einen zweiten Wandteleskopschuss (30a, 30b) aufweist, wobei der erste Bodenteleskopschuss (20a) das Bodenteil (2) und der erste Wandteleskopschuss (30a) die Wandung (3) in eine erste Erweiterungsrichtung (EW1) wahlweise erweitern, und wobei der zweite Bodenteleskopschuss (20b) das Bodenteil (2) und der zweite Wandteleskopschuss (30b) die Wandung (3) in eine zweite, der ersten, vorzugsweise entgegengesetzten, Erweiterungsrichtung (EW2) wahlweise erweitern, derart, dass mit dem Erweitern der Lastaufnahmeraum (LA) vergrößert ist, und wobei eine Anzahl Kraftübertragungseinheiten (4) den ersten mit dem zweiten Bodenteleskopschuss (20a, 20b) und / oder den ersten mit dem zweiten Wandteleskopschuss (30a, 30b) verbindet. Weiterhin wird ein Lastenfahrrad (10) mit Lastaufnahmevorrichtung (1) vorgestellt.

## Beschreibung

Die Erfindung betrifft eine Lastaufnahmevorrichtung nach den Merkmalen des Anspruchs 1.

Lastenfahrräder sind aus der Praxis bekannt und unterliegen derzeit einer zunehmenden Berücksichtigung in Funktion logistischer Transportfahrzeuge, welche insbesondere im urbanen Raum flexibel und umweltfreundlich nutzbar sind und dadurch gegenüber herkömmlichen Fahrzeugen im Vorteil sind.

Die bekannten Lastenfahrräder sind konzipiert sowohl für einen Transport von Gegenständen als auch für einen Transport von Personen, insbesondere Kindern, oder Tieren. Im Kontext der Erfindung wird der Begriff Last stellvertretend für die zuvor genannten Gegenstände, Personen und Tiere verwendet. Zweckmäßigerweise umfassen derartige Lastenfahrräder eine Lastaufnahmevorrichtung, mit welcher ein oder mehrere Lasten befördert werden können.

In der Praxis sind Lastaufnahmevorrichtungen bekannt, beispielsweise in vielfältiger Abwandlung unter Bezeichnungen wie Behälter, Kiste, Box oder dergleichen. Im Wesentlichen eint diese ein Bodenteil mit einer Wandung, wobei Bodenteil und Wandung einen Lastaufnahmeraum begrenzen. Die Wandung kann dabei das Bodenteil zirkumferent umlaufen oder nur abschnittsweise angeordnet sein. Weiterhin kann die Wandung unterschiedliche Höhen und Dicken umfassen. Haltevorrichtungen, insbesondere Gurte oder Ähnliches, oder Sitzschalen, insbesondere spezielle Kindersitzschalen, dienen der Sicherung der Lasten während des Transports. Mittels Haube, Deckel, Verdeck oder Ähnlichem gelingt eine im Wesentlichen regen- und / oder winddichte Abdeckung des Lastaufnahmeraums. Im Allgemeinen werden Bodenteil und Wandung von einem Rahmen des Lastenrads getragen, wobei entweder der Rahmen oder das Bodenteil den tiefsten Punkt ausbilden kann.

Vermehrt unterliegen Lastenfahrräder einem multifunktionalen Anforderungsprofil. Beispielsweise besteht die Erwartungshaltung, Lasten unterschiedlicher Größendimension transportieren zu können, ohne dabei eine kompakte Bauweise des Lastenfahrrads einbüßen zu müssen oder dafür auf Transportmittel unterschiedlicher Größenverhältnisse zurückgreifen zu müssen. Stattdessen besteht der Wunsch eines transformierbaren Grundkonzepts, um das Lastenfahrrad auf die zu transportierende Last flexibel ausrichten zu können.

Eine Vergrößerung des Lastaufnahmeraums erfolgt in der Praxis bspw. durch einen sogenannten Aufsatzrahmen, mit welchen eine vorhandene Wandung wahlweise, d. h. reversibel, erweitert werden kann. Weiterhin bekannt sind faltbare Lastaufnahmevorrichtungen. So beschreibt DE 20 2018 001 016 U1 beispielsweise einen größenvariablen Transportbehälter mit klappbaren Seitenwänden.

Die bekannten Ausgestaltungen eint das Problem einer teilweise sehr umständlichen Handhabbarkeit. Weiterhin sind die bekannten Lastaufnahmevorrichtungen in einer sogenannten Ausgangsstellung, in welcher die Lastaufnahmevorrichtung einen minimalen Lastaufnahmeraum ausbildet, gar nicht oder nur eingeschränkt nutzbar. Eine uneingeschränkte Verwendbarkeit ist dagegen nur möglich, wenn die Lastaufnahmevorrichtung die Konfiguration einer Erweiterungsstellung eingenommen hat, d.h. wenn die Wandung vollständig ausgeklappt ist und ein im Vergleich zur Ausgangsstellung maximal vergrößerter Lastaufnahmeraum ausgebildet ist.

Vor diesem Hintergrund ist es eine Aufgabe der vorgestellten Erfindung, eine einfach handhabbare Lastaufnahmevorrichtung bereitzustellen. Weiterhin liegt der Erfindung die Aufgabe zugrunde, eine Lastaufnahmevorrichtung zu schaffen, die in möglichst vielen Konfigurationen uneingeschränkt nutzbar ist. Schließlich gilt es, ein möglichst flexibel einsetzbares Transportfahrzeug bereitzustellen.

Gelöst wird die Aufgabe durch eine Lastaufnahmevorrichtung nach den Merkmalen des Anspruchs 1 und durch ein Lastenfahrrad nach Anspruch 15. Weitere vorteilhafte Aspekte, Details und Ausgestaltungen der Erfindung ergeben sich aus den abhängigen Ansprüchen und der Beschreibung.

Gemäß einem ersten Aspekt wird eine Lastaufnahmevorrichtung für ein Lastenfahrrad vorgeschlagen, insbesondere für ein Lastenfahrrad in Long-John-Bauweise, mit einem Bodenteil und mit einer an das Bodenteil anschließenden Wandung, derart, dass Bodenteil und Wandung einen Lastaufnahmeraum begrenzen, wobei das Bodenteil einen ersten und einen zweiten Bodenteleskopschuss aufweist und die Wandung einen ersten und einen zweiten Wandteleskopschuss aufweist, wobei der erste Bodenteleskopschuss das Bodenteil und der erste Wandteleskopschuss die Wandung in eine erste Erweiterungsrichtung wahlweise erweitern, und wobei der zweite Bodenteleskopschuss das Bodenteil und der zweite Wandteleskopschuss die Wandung in eine zweite, der ersten, vorzugsweise entgegengesetzten, Erweiterungsrichtung wahlweise erweitern, derart, dass das bzw. mit dem Erweitern der Lastaufnahmeraum vergrößert ist, und wobei eine Anzahl Kraftübertragungseinheiten den ersten mit dem zweiten Bodenteleskopschuss und / oder den ersten mit dem zweiten Wandteleskopschuss verbindet.

Im Kontext der Erfindung betrifft der Begriff Anzahl eine Einzahl oder eine Mehrzahl eines betreffenden Merkmals. Darüber hinaus werden Begriffe wie "erster" und "zweiter" insbesondere zu Unterscheidungszwecken verwendet und sind nicht in der Art zu interpretieren, dass diese unmittelbar quantitative Einschränkungen eines Merkmals anzeigen oder implizieren.

Mit anderen Worten wird vorschlagsgemäß eine Lastaufnahmevorrichtung bereitgestellt mit einer Wandung und einem Bodenteil, welche jeweils erweiterbar sind aus einer Ausgangsstellung in eine Erweiterungsstellung, und umgekehrt. In der Erweiterungsstellung ist der Lastaufnahmeraum, vorzugsweise ebenso die Grundfläche der Lastaufnahmevorrichtung, gegenüber der Ausgangsstellung vergrößert. Die Verwendung von Teleskopschüssen ermöglicht eine uneingeschränkte Nutzbarkeit des Lastaufnahmeraums, denn etwaige Erweiterungsbauteile oder -baugruppen behindern nicht eine Nutzung, denn diese werden ineinander beziehungsweise auseinander geführt. Im Übrigen kann eine Erweiterung unabhängig von die Lastaufnahmevorrichtung tragenden Bauteilen erfolgen. Beispielsweise ist es vorschlagsgemäß nicht erforderlich, dass ein Fahrzeugrahmen, wie der Rahmen eines Lastenfahrrads, seinerseits erweiterbar ist. Stattdessen kann dieser bevorzugt im Wesentlichen starr ausgestaltet sein, so dass eine im Wesentlichen verwindungssteife Konstruktion erhalten bleiben kann.

In einer Ausgestaltung kann eine Wandung und / oder ein Bodenteil in eine Erweiterungsrichtung unter Verwendung jeweils mehrerer Teleskopschüsse erweiterbar sein. Mehrere Teleskopschüsse sind vorteilbehaftet, um eine maximale Erweiterung bereitstellen zu können und gleichzeitig in Ausgangsstellung einen möglichst kleinen Lastaufnahmeraum gewährleisten zu können. Ein in Ausgangsstellung kleiner Lastaufnahmeraum kann die Handhabung im urbanen Raum vereinfachen, indem beispielsweise weniger Parkraum beansprucht wird.

Weiterhin ist vorschlagsgemäß eine Anzahl Kraftübertragungseinheiten vorgesehen, welche jeweils die ersten Teleskopschüsse mit den zweiten verbinden. Durch die kraftübertragungswirksame Verbindung wird die Handhabung erheblich vereinfacht, indem das Erweitern in einer ersten Erweiterungsrichtung eine bevorzugt synchrone Erweiterung in einer zweiten Erweiterungsrichtung bewirkt. Betätigt beispielsweise ein Handhabender den ersten Wandteleskopschuss und / oder den ersten Bodenteleskopschuss durch ein Ziehen in eine erste Erweiterungsrichtung daran, überträgt das Kraftübertragungselement diese Zugkraft jeweils auf den zweiten Wandteleskopschuss beziehungsweise auf den zweiten Bodenteleskopschuss und drückt diese in die zweite Erweiterungsrichtung, wobei erste und zweite Erweiterungsrichtung bevorzugt in unterschiedliche Richtungen weisen. Dadurch wird eine flexibel einsetzbar und einfach handhabbare Lastaufnahmevorrichtung verwirklicht. Die Anzahl Kraftübertragungseinheiten ist insbesondere dazu konfiguriert, eine Zugkraft in eine Druckkraft zu transformieren und / oder eine Druckkraft in eine Zugkraft zu transformieren.

In einer Ausgestaltung kann vorgesehen sein, dass wenigstens eine Kraftübertragungseinheit als Scherengelenk ausgebildet ist, wobei vorzugsweise in dem ersten und zweiten Bodenteleskopschuss und / oder in dem ersten und zweiten Wandteleskopschuss eine Kulissenführung ausgebildet ist, in welcher das Scherengelenk geführt ist.

Ein Scherengelenk stellt eine besonders effiziente Kraftübertragung bereit, um einen ersten und zweiten Teleskopschuss möglichst synchron bewegen zu können, ohne eine gleichzeitige Handhabung des einen und anderen Teleskopschusses vorauszusetzen. Aus der Praxis sind Scherengelenke bekannt im Einsatz bei Hebebühnen, Kranen, Arbeitsbühnen, Anhängerbühnen, Liften, Laborhebebühnen, um eine Ebene zu heben oder zu senken. Vorliegend wird dagegen eine im Wesentlichen horizontal gerichtete Bewegung beabsichtigt, und somit eine von dem Bekannten abweichende Anwendung.

Gemäß einer Weiterbildung kann vorgesehen sein, dass das Scherengelenk wenigstens ein Gleitteil aufweist, welches in der Kulissenführung gleitend gelagert ist und / oder dass das Scherengelenk wenigstens eine Rolle aufweist, welche in der Kulissenführung rollend gelagert ist.

In einer bevorzugten Kulissenführung können eine Anzahl Gleitteile und Rollen lagern und entlang dessen geführt sein, um eine gerichtete Bewegung der Teleskopschüsse zu bewirken. Beispielsweise können (Zylinder-)Stifte und damit wirkende Gleitlagerbuchsen vorgesehen sein, welche die Reibung reduzieren und für eine präzise, unterbrechungsarme Bewegung sorgen. Auf diese Weise wird gewährleistet, dass für einen Handhabenden nur ein geringer Kraftaufwand erforderlich ist zum Bewegen der Teleskopschüsse. Weiterhin wirken diese einem Verkanten entgegen, so dass eine störungsfreie Handhabung durch ein gleichmäßiges Gleiten ermöglicht wird. Die Kulissenführung verfolgt somit das Ziel die mittels Kraftübertragungselement übertragenen Kräfte zunächst möglichst homogen und störungsfrei von einem Teleskopschuss in das Kraftübertragungselement einzuleiten und dann diese Kraft aus dem Kraftübertragungselement möglichst effizient in einen anderen Teleskopschuss einzuleiten.

Ferner kann bevorzugt vorgesehen sein, dass eine Schussführung ausgebildet ist, welche den ersten und zweiten Bodenteleskopschuss und / oder den ersten und zweiten Wandteleskopschuss entlang einer Erweiterungsrichtung führt.

Zusätzlich oder alternativ zur Kulissenführung kann eine Schussführung dazu dienen, eine Anzahl Teleskopschüsse entlang einer Erweiterungsrichtung zu führen. Besonders bevorzugt können mehrere Führungen einen ersten und einen zweiten Teleskopschuss führen für eine einheitliche und gerichtete Erweiterung der Wandung beziehungsweise des Bodenteils.

Gemäß einer Ausgestaltung kann bspw. vorgesehen sein, dass die Schussführung einen Gleitschlitten aufweist, welcher in einer Führungsschiene verschiebbar gelagert ist und / oder die Schussführung eine Führungsrolle aufweist, welcher auf einer Führungsbahn abrollt.

Besonders einfach, jedoch nicht weniger effizient, kann eine Anzahl Führungsschienen sein, welche die Schussführung bildet. Vorteilhaft können ein erster und zweiter Teleskopschuss auf einer gemeinsamen Führungsschiene gelagert sein, unterstützend eine synchrone und gerichtete Bewegung der Teleskopschüsse. Entlang der Anzahl Gleitschienen können Schlitten, insbesondere Gleitschlitten, und / oder eine Anzahl Rollen gelagert sein.

Weiterhin kann bspw. vorgesehen sein, dass eine Mittelachse der Lastaufnahmevorrichtung in Fahrtrichtung des Lastenfahrrads ausgerichtet ist, vorzugsweise parallel zur Fahrtrichtung ausgerichtet ist, wobei vorzugsweise die erste und die zweite Erweiterungsrichtung senkrecht zur Mittelachse ausgerichtet sind.

Vorzugsweise kann die Lastaufnahmevorrichtung im Wesentlichen spiegelsymmetrisch ausgestaltet sein, so dass eine Mittelachse, insbesondere eine Spiegelachse, im Wesentlichen liegend und in Fahrtrichtung des Lastenfahrrads ausgereichtet sein kann. Vorzugsweise bedingt die Betätigung des einen Teleskopschusses, dass der andere mittels Kraftübertragungselement zugeordnete Teleskopschuss eine gleichmäßige Erweiterung des Lastaufnahmeraums erzwingt. Insbesondere bei einspurigen Fahrzeugen, wie einem Lastenfahrrad, kann somit eine nachteilig außermittige Verlagerung des Schwerpunktes verhindert werden. Vorzugsweise kann die erste und die zweite Erweiterungsrichtung senkrecht zur Mittelachse ausgerichtet sein, so dass eine gleichmäßige Erweiterung in Fahrtrichtung nach links beziehungsweise rechts erfolgen kann.

In einer Ausgestaltung kann bspw. vorgesehen sein, dass die Wandung eine in Fahrtrichtung vordere Vorderwand und eine der Vorderwand gegenüberliegende hintere Rückwand umfasst, wobei vorzugsweise Vorderwand und Rückwand jeweils einen ersten und einen zweiten Wandteleskopschuss aufweisen.

Eine Vorder- und / oder Rückwand sind besonders vorteilhaft, als diese einen maßgeblichen Beitrag zur Ladungssicherung leisten können, insbesondere beim Beschleunigen und beim Abbremsen der Lastaufnahmevorrichtung. Zudem können diese eine Verschmutzung der Last während des Transportes verhindern. Vorder- und Rückwand können unterschiedlich groß sein oder auch im Wesentlichen gleich groß sein. Besonders bevorzugt sind Vorder- und Rückwand im Wesentlichen identisch ausgestaltet, beispielsweise in Art einer modularen Bauweise, so dass die gleichen Bauteile grundsätzlich sowohl als Vorder- als auch als Rückwand verbaut werden können. Im Kontext der Erfindung wird diese Bauweise als Gleichteileprinzip bezeichnet. Derartige Bauteile können den Herstellungsprozess flexibilisieren und die Herstellungskosten reduzieren.

Es kann bspw. vorgesehen sein, dass die Wandung eine Kraftübertragungseinheit aufweist, insbesondere eine in Fahrtrichtung (FR) vordere Vorderwand (31) der Wandung (3) und / oder eine der Vorderwand (31) gegenüberliegende hintere Rückwand (32) der Wandung (3) kann eine Kraftübertragungseinheit aufweisen.

Im Sinne einer besonders einfachen Handhabung kann eine Kraftübertragungseinheit in oder an der Wandung angeordnet sein. Insbesondere die Vorder- und oder die Rückwand können eine Anzahl Kraftübertragungseinheiten aufweisen. Regelmäßig dienen diese als Angriffspunkt für einen Handhabenden, so dass vorteilhaft keine weiteren Betätigungseinrichtungen erforderlich sind. Zudem unterstützt eine derartige Anordnung erstens eine besonders robuste Ausführung, welche im Wartungsfall leicht zugänglich ist. Zweitens wird durch eine derartige Anordnung Bauraum geschaffen, welcher bspw. zur Befestigung der Lastaufnahmevorrichtung genutzt werden kann, bspw. an einem Lastenfahrrad oder dergleichen.

In einer Weiterbildung kann bspw. vorgesehen sein, dass die zuvor erwähnte Vorderwand und die erwähnte Rückwand einen Lastaufnahmeraum begrenzen, welcher ausgehend von dem Bodenteil von unten nach oben erweitert ist.

Besonders bevorzugt kann die Wandung an die Bauweise der die Lastaufnahmevorrichtung tragenden Konstruktion, insbesondere eine Rahmenkonstruktion eines Lastenfahrrads, angepasst sein, indem beispielsweise das regelmäßig kleinere Vorderrad eines Lastenfahrrads in Long-John-Bauweise zumindest teilweise durch eine Wandung abgedeckt und / oder überdeckt wird. Infolgedessen kann der Lastaufnahmeraum vergrößert werden.

Gemäß einer Weiterbildung kann bspw. vorgesehen sein, dass das Bodenteil, die erwähnte Vorderwand und / oder die erwähnte Rückwand jeweils eine Trägerplatte und eine Deckplatte umfasst/umfassen, wobei die Teleskopschüsse und die Kraftübertragungseinheit zwischen Trägerplatte und Deckplatte angeordnet sind.

Die Ausbildung einer Trägerplatte ermöglicht zunächst die Aufnahme wesentlicher Bauteile beziehungsweise Baugruppen. Beispielsweise kann die Trägerplatte eine Anzahl Führungsschienen aufweisen, entlang derer Teleskopschüsse geführt sind. Weiterhin kann ein Gelenkachsensockel zur Anordnung einer Kraftübertragungseinheit, insbesondere eines Scherengelenks, angeordnet sein. Erhebungen können als Anschlag dienen und begrenzen einen Verschiebeweg einer Anzahl Teleskopschüsse. Entweder im Wesentlichen monolithisch mit der Trägerplatte oder als weiteres Bauteil kann eine Anzahl Randteile die Trägerplatte mit einer Deckplatte verbinden. Für eine monolithische Ausgestaltung kann die Trägerplatte vorzugsweise aus einem Vollmaterial gefräst werden. Die Deckplatte wird derart gehalten, dass zwischen Trägerplatte und Deckplatte ein Gelenkbauraum, kurz Gelenkraum, geschaffen ist, welcher dazu dient, die zuvor genannten Maßnahmen aufzunehmen, insbesondere zur Anordnung der Teleskopschüsse und / oder der Kraftübertragungseinheit. Die beschriebene Bauweise ist besonders einfach und kosteneffizient herstellbar und zudem geeignet, ein gegebenenfalls gewünschtes, modulares Baukastenprinzip zu ermöglichen. Bodenteil und / oder Wandung, insbesondere Vorderwand und / oder Rückwand, können eine Trägerplatte und eine Deckplatte aufweisen.

Vorteilhaft kann bspw. vorgesehen sein, dass die Trägerplatte die Führungsschiene und / oder die Führungsbahn aufweist.

Sofern ein oder mehrere Führungsschienen vorgesehen sind, können diese vorteilhaft in dem zuvor bezeichneten Gelenkraum an der Trägerplatte angeordnet sein und beispielsweise auf einer Führungsschiene gleitende und / oder abrollende Schlitten können an den Teleskopschüssen angeordnet sein. Diese Maßnahme ermöglicht eine besonders wartungsarme Bauweise, als die bewegungsrelevanten Elemente keiner unmittelbaren Verunreinigung ausgesetzt sind, sondern stattdessen im Gelenkraum vor äußeren Einflüssen weitestgehend geschützt sind. Zudem wird ein eleganteres Erscheinungsbild unterstützt, indem technisch bedingte Bauteile im Gelenkraum dem optischen Eindruck eines Handhabenden weitestgehend entzogen sind.

Gemäß einer Ausgestaltung kann bspw. vorgesehen sein, dass eine Mittelachse der Lastaufnahmevorrichtung in Fahrtrichtung des Lastenfahrrads ausgerichtet ist, vorzugsweise parallel zur Fahrtrichtung ausgerichtet ist, wobei vorzugsweise die erste und die zweite Erweiterungsrichtung senkrecht zur Mittelachse ausgerichtet sind, und wobei bevorzugt die Wandung wenigstens eine Seitenwand umfasst, welche im Wesentlichen parallel zur Mittelachse ausgerichtet ist, wobei vorzugsweise die Seitenwand mit der erwähnten Vorderwand und mit der erwähnten Rückwand verbunden ist.

Besonders vorteilhaft kann die Wandung als eine das Bodenteil im Wesentlichen zirkumferent umgebende Wandung ausgestaltet sein. Beispielsweise kann dafür eine Anzahl Seitenwände vorgesehen sein, insbesondere zwei im Wesentlichen parallel zur Mittelachse ausgerichtete Seitenwände, in Kombination mit einer Vorderwand und / oder einer Rückwand. Seitenwand, Vorderwand und Rückwand können einen im Wesentlichen geschlossenen Behälter ausbilden, welcher bevorzugt zur Aufnahme von Personen, wie Kleinkindern, oder dergleichen geeignet ist, für welche während des Transports ein Rundumschutz erforderlich ist.

Weiterhin kann bspw. vorgesehen sein, dass die Seitenwand mit dem Bodenteil kraftübertragungswirksam verbunden ist.

Zur Gewährleistung einer möglichst geschlossenen Lastaufnahmevorrichtung kann eine Anzahl Seitenwände mit dem Bodenteil verbunden sein, um weitestgehend zu verhindern, dass Feuchtigkeit oder Verunreinigungen in den Lastaufnahmeraum gelangen können. Ebenso kann verhindert werden, dass Transportgut beziehungsweise eine Last unbeabsichtigt aus dem Lastaufnahmeraum gelangt und beschädigt oder verletzt wird.

Bevorzugt kann vorgesehen sein, dass wenigstens in einer Seitenwand der wenigstens einen Seitenwand eine Einstiegsöffnung und / oder eine Trittöffnung ausgebildet ist.

Eine hohe Wandung ist vorteilhaft, als dass erstens der Lastaufnahmeraum vergrößert wird und zweitens der Last ein größerer Schutz zu Teil werden kann. Nachteilig kann dadurch der Einstieg für Personen erschwert werden, insbesondere bei einer Anzahl hoher Seitenwände. Aus diesem Grund kann eine Einstiegsöffnung vorgesehen sein, welche sich von dem Bodenteil nach oben erstreckt und vorteilhaft in der oberen Kante einer Wandung mündet. Die damit verringerte Einstiegshöhe kann insbesondere Kindern den Einstieg in den Lastaufnahmeraum vereinfachen. Alternativ oder zusätzlich kann eine Anzahl Trittöffnungen vorgesehen sein, welche in der Wandung angeordnet ist und / oder an die Wandung angrenzt und / oder benachbart zur Wandung angeordnet ist, welche als Einstiegshilfe dient, eine höhere Wandung und / oder eine höher gelegene Einstiegsöffnung vereinfacht nutzen beziehungsweise erreichen zu können. Besonders bevorzugt kann eine Trittöffnung unterhalb des Bodenteils angeordnet sein, so dass keine an einem Schuh anhaftende Verunreinigungen durch die Trittöffnung in den Lastaufnahmeraum gelangen können.

In einer Weiterbildung kann bspw. vorgesehen sein, dass ein bewegliches Türblatt ausgebildet ist, mit welchem die Einstiegsöffnung wahlweise verschließbar ist.

Ein Türblatt, welches bevorzugt schwenkbar mit der Wandung verbunden ist, kann vorteilhaft genutzt werden, um eine Einstiegsöffnung wahlweise verschließen zu können, beispielsweise während des Transports, so dass insbesondere Personen während des Transportes im Wesentlichen geschützt sind, gleichzeitig jedoch im Grundsatz ein vereinfachter Ein- und Ausstieg ermöglicht ist. Bevorzugt kann eine Anzahl Scharniere ein Türblatt mit einer Wandung schwenkbar verbinden. Alternativ kann ein Türblatt verschiebbar zur Wandung gehalten sein, beispielsweise indem das Türblatt in einer Anzahl Führungen gehalten ist. Dazu kann das Türblatt derart ausgestaltet sein, dass es innerhalb der Wandung verschiebbar ist. Ein mehrteiliges Türblatt ist von Vorteil, als dass ein erster Teil in einer ersten Richtung verschiebbar beziehungsweise schwenkbar ist und ein zweiter Teil in eine zweite Richtung verschiebbar beziehungsweise schwenkbar ist. Als weitere Maßnahme zur Erhöhung der Betriebssicherheit kann eine Türblattsperre vorgesehen sein, welche das unbeabsichtigte Öffnen beispielsweise während der Fahrt sperrt.

Gemäß einer Ausgestaltung kann bspw. eine Rampe vorgesehen sein, welche wahlweise in oder benachbart der Einstiegsöffnung mündet.

In der zuvor beschriebenen Einstiegsöffnung kann eine Rampe oder ähnliches münden, welche wahlweise anordnenbar ist, um beispielsweise einem Tier den Einstieg zu erleichtern. Im Kontext betrifft benachbart eine Anordnung, in welcher auch ein kleines Tier, keine wesentliche Hürde zu überwinden hat, um von der Rampe durch die Einstiegsöffnung in den Lastaufnahmeraum zu gelangen, vorteilhaft ein Abstand zwischen 5 cm und 30 cm, besonders bevorzugt 10 cm. Die Rampe kann vorteilhaft in einer Führung unterhalb des Bodenteils verschiebbar gehalten sein. Mittels Rampensperre kann bevorzugt sichergestellt werden, dass ein Ausfahren der Rampe unter der Fahrt ausgeschlossen ist.

Es kann fernerhin bspw. vorgesehen sein, dass der erste Bodenteleskopschuss mit dem ersten Wandteleskopschuss mittels eines Verbindungsteils kraftübertragungswirksam verbunden ist und / oder der zweite Bodenteleskopschuss mit dem zweiten Wandteleskopschuss mittels eines Verbindungsteils kraftübertragungswirksam verbunden ist.

Besonders bevorzugt kann eine Anzahl Verbindungsteile eine Anzahl Teleskopschüsse miteinander verbinden. Mittels Verbindungsteil können die Herstellungskosten reduziert werden, indem eine Anzahl notwendiger Kraftübertragungseinheiten reduziert werden kann, was nachfolgend an einem konkreten Ausführungsbeispiel erläutert wird:
▪ Zunächst kann eine Kraftübertragungseinheit den ersten mit dem zweiten Wandteleskopschuss verbinden.
▪ Weiterhin verbindet ein Verbindungsteil den ersten Bodenteleskopschuss mit dem ersten Wandteleskopschuss und ein weiteres Verbindungsteil verbindet den zweiten Bodenteleskopschuss mit dem zweiten Wandteleskopschuss.
▪ Zieht ein Handhabender an dem ersten Wandteleskopschuss in eine erste Erweiterungsrichtung bewirkt die Kraftübertragungseinheit die Erstreckung des zweiten Wandteleskopschusses in eine zweite Erweiterungsrichtung.
▪ Die Verbindungsteile bewirken, dass bei der Bewegung der Wandteleskopschüsse die Bodenteleskopschüsse mitbewegt werden, ohne dass dafür beispielsweise eine weitere Kraftübertragungseinheit erforderlich wäre.

In gleicher Weise kann auch das Bodenteil die Kraftübertragungseinheit aufweisen oder eine erwähnte Vorderwand und / oder eine erwähnte Rückwand kann/können eine Anzahl Kraftübertragungseinheiten aufweisen.

Fernerhin kann bspw. vorgesehen sein, dass die Seitenwand der wenigstens einen Seitenwand das Verbindungsteil ausbildet.

Besonders bevorzugt kann eine Seitenwand ein Verbindungsteil schaffen, denn es ist besonders geeignet, Bewegungskräfte homogen zu übertragen. Zudem ist die Handhabung einer Seitenwand zur Vergrößerung des Lastaufnahmeraums besonders intuitiv und hilft, Beschädigungen zu vermeiden.

In einer Ausgestaltung kann vorgesehen sein, dass das Bodenteil und / oder die Wandung eine Anzahl Sicherungsmittel umfasst/umfassen, welche eine Erweiterungsstellung sichert.

Als Maßnahme einer weitestgehenden Betriebssicherheit kann insbesondere eine Sicherungseinrichtung mit einer Anzahl Sicherungsmittel vorgesehen sein, welche das Bodenteil und / oder die Wandung in einer Erweiterungsstellung und / oder in einer Ausgangsstellung sichert. Als Sicherungsmittel haben sich in ersten, nicht öffentlichen Versuchen Sicherungsrasten als besonders effektiv und einfach handhabbar erwiesen.

In Erstreckungsrichtung kann über die Länge der Teleskopschüsse eine Vielzahl Erweiterungsstellungen vorgesehen sein. Die Erweiterungsstellungen können im Wesentlichen freiwählbar sein durch eine bevorzugte stufenlose Erweiterung, so dass auch der Lastaufnahmeraum stufenlos vergrößert wird. Alternativ oder ergänzend kann eine diskrete Anzahl Erweiterungsstellungen mit entsprechend korrelierter Größe bzw. Fassungsvermögen des Lastaufnahmeraums vorgesehen sein, welche beispielsweise mit der Anzahl vorzugsweise jeweils eine Erweiterungsstellung sichernde Sicherungsmittel übereinstimmt. Besonders bevorzugt können drei Stellungen verwirklicht sein: eine Ausgangsstellung, eine mittlere und eine maximale Erweiterungsstellung.

Es kann weiterhin bspw. vorgesehen sein, dass die Wandung eine in Fahrtrichtung vordere Vorderwand und eine der Vorderwand gegenüberliegende hintere Rückwand umfasst, wie bereits erläutert, wobei vorzugsweise Vorderwand und Rückwand jeweils einen ersten und einen zweiten Wandteleskopschuss aufweisen. Bevorzugt umfasst die Vorderwand und / oder die Rückwand eine Anzahl Sicherungsmittel, welche eine Anzahl Teleskopschüsse in einer Erweiterungsstellung und / oder in einer Ausgangsstellung sichert.

Die zuvor beschriebenen Sicherungsmittel können bevorzugt in der Vorderwand und / oder der Rückwand angeordnet sein, da eine dortige Positionierung für einen Handhabenden gut erreichbar ist und eine Sicherung mit einfachen Mitteln bereitstellen kann. Dabei kann insbesondere vorgesehen sein, dass eine Mittelachse der Lastaufnahmevorrichtung in Fahrtrichtung des Lastenfahrrads ausgerichtet ist, vorzugsweise parallel zur Fahrtrichtung ausgerichtet ist, wobei vorzugsweise die erste und die zweite Erweiterungsrichtung senkrecht zur Mittelachse ausgerichtet sind.

Gemäß einer Weiterbildung kann bspw. vorgesehen sein, dass wenigstens eine Wandausnehmung in der Wandung und eine Teleskopschussausnehmung in einem Wandteleskopschuss ausgebildet sind, wobei Wandausnehmung und Teleskopschussausnehmung in einer Erweiterungsstellung und / oder in einer Ausgangsstellung miteinander fluchtend wahlweise anordnenbar sind, und wobei vorzugsweise das Sicherungsmittel einen Sicherungsstift aufweist, welcher sich wahlweise in die Ausnehmungen erstreckt.

Eine bereits angedeutete Rastsicherung ist besonders einfach und zuverlässig. Es können eine Anzahl Ausnehmungen in der Wandung und in einer Anzahl Teleskopschüssen miteinander fluchtend ausrichtbar sein. Mittels Rastnase, Rast- oder Sicherungsstift, oder Ähnlichem kann eine Erweiterungsstellung und / oder eine Ausgangsstellung gegen eine weitere, unbeabsichtigte Relativbewegung gesichert werden und erst nach einem Herausführen des Sicherungsmittels aus der Anzahl Ausnehmungen eine weitere Bewegung freigegeben werden. Besonders bevorzugt sind wenigstens zwei Ausnehmungen, beispielsweise in Art einer Bohrung, in einem Wandteleskopschuss und wenigstens eine Ausnehmung, beispielsweise ebenfalls in Art einer Bohrung, in einer Wandung vorgesehen, wobei die Ausnehmungen in dem Wandteleskopschuss in Erweiterungsrichtung zueinander versetzt angeordnet sind. Eine derartige Anordnung der Ausnehmung kann zweckmäßig sein, um sowohl eine Erweiterungsstellung als auch die Ausgangsstellung, in welcher der Lastaufnahmeraum minimal ist, gegen eine unbeabsichtigte Bewegung zu sichern.

Vorteilhaft kann bspw. vorgesehen sein, dass eine Vielzahl Wandausnehmungen und Teleskopschussausnehmungen ausgebildet sind, welche wahlweise miteinander fluchtend anordnenbar sind, derart, dass eine Vielzahl Erweiterungsstellungen einstellbar sind, wobei eine erste Erweiterungsstellung einen kleineren Lastaufnahmeraum schafft als eine zweite Erweiterungsstellung.

In Anlehnung an die vorherige Beschreibung können eine Vielzahl Ausnehmungen insbesondere in der Wandung, bevorzugt in der Vorderwand und / oder Rückwand, vorgesehen sein, um nicht nur eine Ausgangstellung und eine Erweiterungsstellung sichern zu können, sondern stattdessen eine Vielzahl Erweiterungsstellungen sichern zu können. Auf diese Weise kann ein Handhabender in die Lage versetzt werden, auf individuelle Lastsituation reagieren zu können, und den Lastaufnahmeraum so klein wie möglich und so groß wie nötig zu schaffen. Denn mit zunehmender Größe des Lastaufnahmeraums kann insbesondere bei einem Gebrauch der Lastaufnahmevorrichtung mittels Lastenfahrrad die Gebrauchstauglichkeit aufgrund beengter Platzverhältnisse im Verkehrsraum beeinträchtigt werden.

Gemäß einem zweiten Aspekt der Erfindung wird ein Lastenfahrrad vorgeschlagen, mit einem Rahmen und mit einer von dem Rahmen getragenen Lastaufnahmevorrichtung, wobei die Lastaufnahmevorrichtung eine Anzahl der beschriebenen Merkmale aufweist.

Weiterbildend kann bspw. vorgesehen sein, dass das Lastenfahrrad in Long-John-Bauweise ausgestaltet ist, derart, dass die Lastaufnahmevorrichtung in Fahrtrichtung des Lastenfahrrads zwischen einem Lenkrohr und einer Gabeleinheit angeordnet ist.

Die vorgestellte Lastaufnahmevorrichtung ist besonders geeignet, im Rahmen einer modularen Fertigung hergestellt zu werden. Bevorzugt sind keine wesentlichen stoffschlüssigen Verbindungstechniken vorgesehen, so dass eine nachfragespezifische Montage der Komponenten und eine einfache, sortenreine Zerlegung ermöglicht werden, was die Wiederverwertbarkeit der verwendeten Materialien verbessert. Bereits erwähnt wurde das Gleichteileprinzip, welches vorsehen kann, dass die Wandung vorzugsweise eine Vorderwand und eine Rückwand umfasst, welche im Wesentlichen gleich ausgestaltet sind. Gleiche Teile können die Herstellung und Montage vereinfachen und eine Fehleranfälligkeit reduzieren. Leichtbauplatten aus Kunststoff zur Verwendung in dem Bodenteil und / oder in der Wandung haben sich in ersten, nicht öffentlichen Versuchen als besonders vorteilhaft erwiesen. Als zweckmäßig hat es sich erwiesen, etwaige Trägerplatten bevorzugt aus einem Vollmaterial zu fräsen, um beispielsweise keine kostenintensiven (Spritz-)Werkzeuge anschaffen zu müssen. Eine Anzahl Plattenwerkstoffe können vorteilhaft Kunststoffplatten in Leichtbauweise umfassen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a, b: ein Ausführungsbeispiel einer Lastaufnahmevorrichtung in Ausgangsstellung (Fig. 1a) und in Erweiterungsstellung (Fig. 1b),
- Fig. 2: eine Rückwand aus dem Ausführungsbeispiel gemäß Fig. 1a, b, und
- Fig. 3a, b: ein Ausführungsbeispiel eines Lastenfahrrads mit einer Lastaufnahmevorrichtung in Ausgangsstellung gemäß Fig. 1a (Fig. 3a) und in Erweiterungsstellung gemäß Fig. 1b (Fig. 3b).

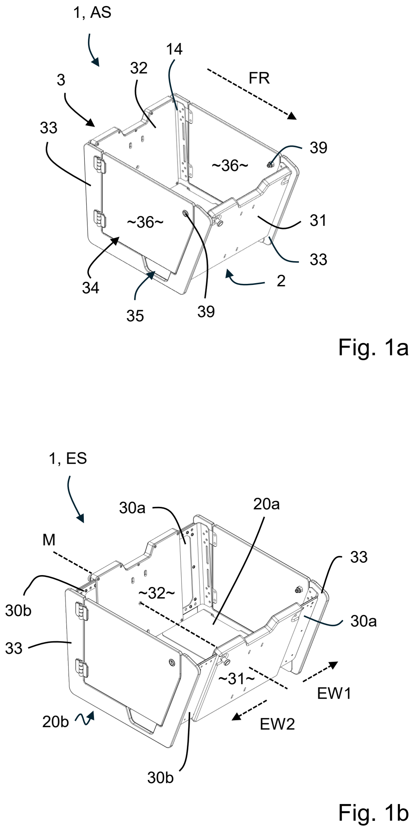

Fig. 1a zeigt ein Ausführungsbeispiel einer Lastaufnahmevorrichtung 1 in Ausgangsstellung AS mit einer in Fahrtrichtung FR (mittels gestricheltem Pfeil angedeutet) vorderen Vorderwand 31 und einer hinteren Rückwand 32, ausbildend einen Teil einer Wandung 3, welche mit einem Bodenteil 2 verbunden ist. Zwei Seitenwände 33 weisen jeweils einer Einstiegsöffnung 34 und eine Trittöffnung 35 auf, wobei die Einstiegsöffnung 34 mittels schwenkbarem Türblatt 36 wahlweise verschließbar ist. Bodenteil 2 und Wandung 3 begrenzen einen Aufnahmeraum. Ein Türschloss 39 dient der Sicherung der Geschlossenstellung des Türblattes 36. Die Seitenwände 33 sind mit Winkelverbindern 14 jeweils mit der Vorderwand 31 und der Rückwand 32 verbunden. Sämtliche Plattenwerkstoffe umfassen Kunststoffplatten in Leichtbauweise.

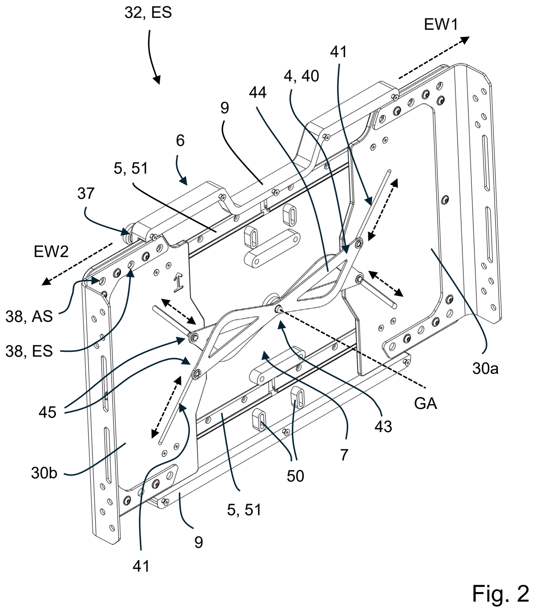

Die Lastaufnahmevorrichtung 1 nunmehr in einer Erweiterungsstellung ES zeigt Fig. 1b, wobei ein erster Bodenteleskopschuss 20a und erste Wandteleskopschüsse 30a in einer ersten Erweiterungsrichtung EW1 (mittels gestricheltem Pfeil angedeutet) erweitert sind und spiegelsymmetrisch dazu ein zweiter Bodenteleskopschuss 20b (aus Darstellungsgründen nicht sichtbar) und zweite Wandteleskopschüsse 30b in einer zweiten Erweiterungsrichtung EW2 (mittels gestricheltem Pfeil angedeutet) erweitert sind. Die Bodenteleskopschüsse 20a, b sind jeweils mit einer Seitenwand 33 verbunden, so dass bei einer Handhabung der in Fahrtrichtung FR linken Seitenwand 33, insbesondere einem Ziehen an der Seitenwand 33 in Erweiterungsrichtung EW1, beispielsweise der erste Bodenteleskopschuss 20a und die ersten Wandteleskopschüsse 30a mitgenommen werden, derart, dass der Lastaufnahmeraum insgesamt vergrößert wird. Die Funktionsweise einer synchronen Bewegung in Erweiterungsrichtung EW2 wird im Zusammenhang mit Fig. 2 erläutert. Die Erweiterungsrichtungen EW1, EW2 sind senkrecht zur Mittelachse M (mittels gestrichelter Linie angedeutet) der Lastaufnahmevorrichtung 1 ausgerichtet.

Die in Fig. 1a, b gezeigte Vorderwand 31 ist baugleich ausgeführt wie die Rückwand 32, welche nachfolgend im Detail zu Fig. 2 beschrieben ist, wobei in dem Ausführungsbeispiel eine maximale Erweiterungsstellung ES eingenommen ist. Auf einer Trägerplatte 6 mit zwei Randabschnitten 9 ist eine Schussführung 5 montiert mit vier parallel zueinander verlaufenden und im Abstand voneinander montierten Führungsschienen 51, in welchen jeweils Gleitschlitten gleitend gelagert sind. Jeweils zwei Gleitschlitten, verdeckt durch die Wandteleskopschüsse 30a, b und daher in der Figur nicht sichtbar, sind befestigt an dem ersten beziehungsweise zweiten Wandteleskopschuss 30a, b, so dass die Wandteleskopschüsse 30a, b entlang der Führungsschienen 51 verschiebbar gelagert sind. Nach innen wird die minimale Ausgangsstellung AS begrenzt durch mehrere Anschläge 50.

Auf einem Gelenkachsensockel 43 ist ein Scherengelenk 40 mit vier Gelenkarmen 44 befestigt, wobei jeweils zwei Gelenkarme 44 entlang einer gemeinsamen Strecke ausgerichtet sind und sich radial von der Gelenkachse GA (mittels gestrichelter Linie angedeutet) in Erweiterungsrichtung EW1 beziehungsweise EW2 erstrecken. Endständig eines jeweiligen Gelenkarms 44 ist ein Zylinderstift mit Gleitlagerbuchse 45 angeordnet, wobei diese in einer Kulissenführung 41 geführt sind (Bewegungsrichtung mittels gestricheltem Doppelpfeil angedeutet), welche in den Wandteleskopschüssen 30a, b angeordnet ist. Anknüpfend an die Beschreibung zu Fig. 1b, wird bei einem Ziehen an der Seitenwand 33 in Erweiterungsrichtung EW1 durch die Kulissenführung 41 in dem ersten Wandteleskopschuss 30a die Zugkraft aus dem ersten Wandteleskopschuss 30a in das Scherengelenk 40 eingeleitet und übertragen auf den zweiten Wandteleskopschuss 30b. Infolgedessen wird eine synchrone Bewegung von erstem und zweitem Wandteleskopschuss 30a, b erzielt. In gleicher Weise wird ein auf einen ersten Wandteleskopschuss 30a wirkender Arbeitsdruck in Art einer Druckkraft, ausgeübt durch einen Handhabenden, übertragen und umgewandelt in eine den jeweils zweiten Wandteleskopschuss 30b einziehende Kraft zur Ausbildung einer Erweiterungsstellung ES mit einem zum ursprünglichen vergleichsweise verkleinertem Lastaufnahmeraum oder zur Einnahme der Ausgangsstellung AS mit minimalem Lastaufnahmeraum.

Weiterhin sind in Fig. 2 eine Vielzahl Teleskopschussausnehmungen 38 angeordnet, und zwar jeweils in Art einer Bohrung, welche wahlweise fluchtend mit einer Wandausnehmung 37 anordnenbar sind zur Sicherung einer Erweiterungsstellung ES oder der Ausgangsstellung AS.

Mittels Deckplatte wird der Gelenkraum 7 im Wesentlichen abgedeckt und mit den Randabschnitten 9 der Trägerplatte 6 verschraubt, so dass das Scherengelenk 40, die Kulissenführung 41 und die Führungsschienen 51 vor Verunreinigungen oder dergleichen geschützt sind. Aus Dartstellungsgründen ist die Deckplatte vorliegend nicht eingezeichnet.

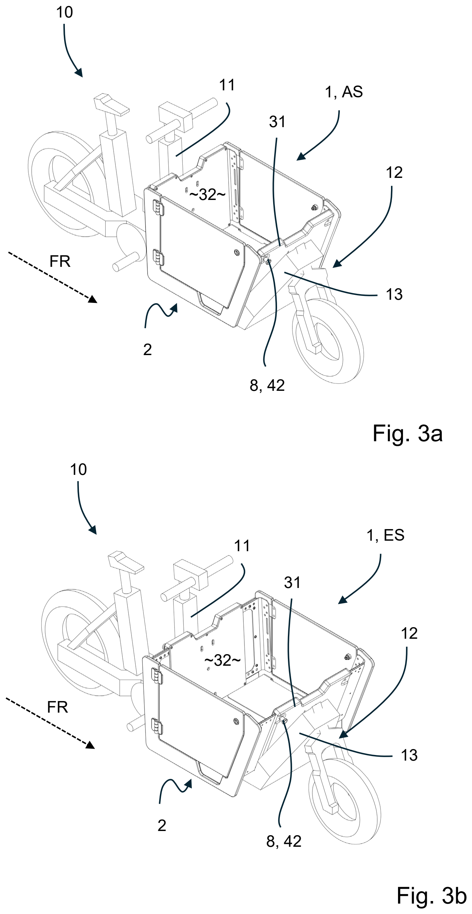

Fig. 3a, b zeigt skizzenhaft ein Ausführungsbeispiel eines Lastenfahrrads 10 in Long-John-Bauweise mit einer Lastaufnahmevorrichtung 1 in Ausgangsstellung AS gemäß Fig. 1a (Fig. 3a) und in Erweiterungsstellung ES gemäß Fig. 1b (Fig. 3b). Die Lastaufnahmevorrichtung 1 ist in Fahrtrichtung FR des Lastenfahrrads 10 zwischen einem Lenkrohr 11 und einem Gabeleinheit 12 angeordnet.

Die Vorderwand 31 ist winkelig zur Hinterwand 32 ausgerichtet, in der Art, dass sich der Lastaufnahmeraum von dem Bodenteil 2 nach oben erweitert und dem Rahmen 13 des Lastenfahrrads 10 anliegt. Ein federbelasteter Sicherungsstift 42 erstreckt sich durch die Wandausnehmung 37 bis in eine Teleskopschussausnehmung 38 zur Sicherung der Ausgangsstellung AS.

Fig. 3b zeigt demgegenüber die Lastaufnahmevorrichtung 1 in maximaler Erweiterungsstellung, wobei mittels des federbelasteten Sicherungsstifts 42 die Erweiterungsstellung gesichert ist. Dabei erstreckt sich der Sicherungsstifts 42 wiederum durch die Wandausnehmung 37 bis in eine Teleskopschussausnehmung 38.

Sowohl die Vorderwand 31 als auch die Rückwand 32 weisen jeweils einen Sicherungsstift 42 auf. Damit dieser einen gewünschten Stellungswechsel nicht behindert, kann ein Sicherungsstift 42 eine Dreharretierung aufweisen, so dass dieser zunächst gegen eine Federkraft aus den Ausnehmungen 37, 38 gezogen werden muss und mittels Achtel- oder Vierteldrehung in einer Arretierstellung gehalten wird. Unabhängig von dem beschriebenen Ausführungsbeispiel kann insbesondere die Rückwand 32 die beschriebene Dreharretierung aufweisen. Die synchrone, spiegelsymmetrische Erweiterung stellt sicher, dass der Schwerpunkt der Lastaufnahmevorrichtung 1, und damit der Schwerpunkt des Lastenfahrrads 10, nicht verschoben wird, was die Handhabung und die Verkehrssicherheit wesentlich verbessert.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Lastaufnahmevorrichtung
- 2: Bodenteil
- 3: Wandung
- 4: Kraftübertragungseinheit
- 5: Schussführung
- 6: Trägerplatte
- 7: Gelenkraum
- 8: Sicherungsmittel
- 9: Randabschnitt
- 10: Lastenfahrrad
- 11: Lenkrohr
- 12: Gabeleinheit
- 13: Rahmen
- 14: Winkelverbinder
- 20a: erster Bodenteleskopschuss
- 20b: zweiter Bodenteleskopschuss
- 30a: erster Wandteleskopschuss
- 30b: zweiter Wandteleskopschuss
- 31: Vorderwand
- 32: Rückwand
- 33: Seitenwand
- 34: Einstiegsöffnung
- 35: Trittöffnung
- 36: Türblatt
- 37: Wandausnehmung
- 38: Teleskopschussausnehmung
- 39: Türschloss
- 40: Scherengelenk
- 41: Kulissenführung
- 42: Sicherungsstift
- 43: Gelenkachsensockel
- 44: Gelenkarm
- 45: Zylinderstift mit Gleitlagerbuchse
- 50: Anschläge
- 51: Führungsschiene
- AS: Ausgangsstellung
- EW1: erste Erweiterungsrichtung
- EW2: zweite Erweiterungsrichtung
- ES: Erweiterungsstellung
- FR: Fahrtrichtung
- GA: Gelenkachse
- LA: Lastaufnahmeraum
- M: Mittelachse

## Patentansprüche

1. Lastaufnahmevorrichtung (1) für ein Lastenfahrrad (10), insbesondere für ein Lastenfahrrad (10) in Long-John-Bauweise,
mit einem Bodenteil (2)
und mit einer an das Bodenteil (2) anschließenden Wandung (3), derart, dass Bodenteil (2) und Wandung (3) einen Lastaufnahmeraum (LA) begrenzen,
**dadurch gekennzeichnet,**
**dass** das Bodenteil (2) einen ersten und einen zweiten Bodenteleskopschuss (20a, 20b) aufweist
und die Wandung (3) einen ersten und einen zweiten Wandteleskopschuss (30a, 30b) aufweist,
wobei der erste Bodenteleskopschuss (20a) das Bodenteil (2) und der erste Wandteleskopschuss (30a) die Wandung (3) in eine erste Erweiterungsrichtung (EW1) wahlweise erweitern,
und wobei der zweite Bodenteleskopschuss (20b) das Bodenteil (2) und der zweite Wandteleskopschuss (30b) die Wandung (3) in eine zweite, der ersten, vorzugsweise entgegengesetzten, Erweiterungsrichtung (EW2) wahlweise erweitern, derart, dass das Erweitern den Lastaufnahmeraum (LA) vergrößert,
und wobei eine Anzahl Kraftübertragungseinheiten (4) den ersten mit dem zweiten Bodenteleskopschuss (20a, 20b) und / oder den ersten mit dem zweiten Wandteleskopschuss (30a, 30b) verbindet.

2. Lastaufnahmevorrichtung (1) nach Anspruch 1,
**dadurch gekennzeichnet,**
**dass** wenigstens eine Kraftübertragungseinheit (4) als Scherengelenk (40) ausgebildet ist,
wobei vorzugsweise in dem ersten und zweiten Bodenteleskopschuss (20a, 20b) und / oder in dem ersten und zweiten Wandteleskopschuss (30a, 30b) eine Kulissenführung (41) ausgebildet ist, in welcher das Scherengelenk (40) geführt ist.

3. Lastaufnahmevorrichtung (1) nach Anspruch 2,
**dadurch gekennzeichnet,**
**dass** das Scherengelenk (40) wenigstens ein Gleitteil aufweist, welches in der Kulissenführung (41) gleitend gelagert ist und / oder dass das Scherengelenk (40) wenigstens eine Rolle aufweist, welche in der Kulissenführung (41) rollend gelagert ist.

4. Lastaufnahmevorrichtung (1) nach einem der vorgenannten Ansprüche,
**dadurch gekennzeichnet,**
**dass** die Wandung (3) eine Kraftübertragungseinheit (4) aufweist,
insbesondere dass eine in Fahrtrichtung (FR) vordere Vorderwand (31) der Wandung (3) und / oder eine der Vorderwand (31) gegenüberliegende hintere Rückwand (32) der Wandung (3) eine Kraftübertragungseinheit aufweist.

5. Lastaufnahmevorrichtung (1) nach einem der vorhergehenden Ansprüche,
**dadurch gekennzeichnet,**
**dass** eine Mittelachse (M) der Lastaufnahmevorrichtung (1) in Fahrtrichtung (FR) des Lastenfahrrads (10) ausgerichtet ist, vorzugsweise parallel zur Fahrtrichtung (FR) ausgerichtet ist,
wobei vorzugsweise die erste und die zweite Erweiterungsrichtung (EW1, EW2) senkrecht zur Mittelachse (M) ausgerichtet sind,
und **dass** die Wandung (3) wenigstens eine Seitenwand (33) umfasst, welche im Wesentlichen parallel zur Mittelachse (M) ausgerichtet ist,
wobei vorzugsweise die Seitenwand (33) mit einer in Fahrtrichtung (FR) vorderen Vorderwand (31) der Wandung (3) und mit einer der Vorderwand (31) gegenüberliegenden hinteren Rückwand (32) der Wandung (3) verbunden ist, wobei insbesondere die Seitenwand (33) mit dem Bodenteil (2) kraftübertragungswirksam verbunden ist.

6. Lastaufnahmevorrichtung (1) nach Anspruch 5,
**dadurch gekennzeichnet,**
**dass** wenigstens in einer Seitenwand (33) der wenigstens einen Seitenwand (33) eine Einstiegsöffnung (34) und / oder eine Trittöffnung (35) ausgebildet ist.

7. Lastaufnahmevorrichtung (1) nach Anspruch 6,
**dadurch gekennzeichnet,**
**dass** ein bewegliches Türblatt (36) ausgebildet ist, mit welchem die Einstiegsöffnung (34) wahlweise verschließbar ist.

8. Lastaufnahmevorrichtung (1) nach Anspruch 6 oder 7,
**gekennzeichnet durch**
eine Rampe, welche wahlweise in der Einstiegsöffnung (34) mündet.

9. Lastaufnahmevorrichtung (1) nach einem der vorgenannten Ansprüche,
**dadurch gekennzeichnet,**
**dass** der erste Bodenteleskopschuss (20a) mit dem ersten Wandteleskopschuss (30a) mittels eines Verbindungsteils kraftübertragungswirksam verbunden ist und / oder der zweite Bodenteleskopschuss (20b) mit dem zweiten Wandteleskopschuss (30b) mittels eines Verbindungsteils kraftübertragungswirksam verbunden ist.

10. Lastaufnahmevorrichtung (1) nach einem der Ansprüche 5 bis 8 und Anspruch 9,
**dadurch gekennzeichnet,**
**dass** die Seitenwand (33) der wenigstens einen Seitenwand (33) das Verbindungsteil ausbildet.

11. Lastaufnahmevorrichtung (1) nach einem der vorgenannten Ansprüche,
**dadurch gekennzeichnet,**
**dass** das Bodenteil (2) und / oder die Wandung (3) eine Anzahl Sicherungsmittel (8) umfasst/umfassen, welche eine Erweiterungsstellung (ES) und / oder eine Ausgangsstellung (AS) sichert.

12. Lastaufnahmevorrichtung (1) nach Anspruch 11,
**dadurch gekennzeichnet,**
**dass** die Wandung (3) eine in Fahrtrichtung (FR) vordere Vorderwand (31) und eine der Vorderwand (31) gegenüberliegende hintere Rückwand (32) umfasst,
wobei vorzugsweise Vorderwand (31) und Rückwand (32) jeweils einen ersten und einen zweiten Wandteleskopschuss (30a, 30b) aufweisen,
und **dass** die Vorderwand (31) und / oder die Rückwand (32) eine Anzahl Sicherungsmittel (8) aufweist/aufweisen, welche eine Anzahl Teleskopschüsse (20a, 20b, 30a, 30b) in einer Erweiterungsstellung (ES) und / oder in einer Ausgangsstellung (AS) sichert.

13. Lastaufnahmevorrichtung (1) nach Anspruch 12,
**dadurch gekennzeichnet,**
**dass** wenigstens eine Wandausnehmung (37) in der Wandung (3) und eine Teleskopschussausnehmung (38) in einem Wandteleskopschuss (30a, 30b) ausgebildet sind,
wobei Wandausnehmung (37) und Teleskopschussausnehmung (38) in einer Erweiterungsstellung (ES) und / oder in einer Ausgangsstellung (AS) miteinander fluchtend wahlweise anordnenbar sind,
und wobei vorzugsweise das Sicherungsmittel (8) einen Sicherungsstift aufweist, welcher sich wahlweise in die Ausnehmungen (37, 38) erstreckt.

14. Lastaufnahmevorrichtung (1) nach Anspruch 13,
**dadurch gekennzeichnet,**
**dass** eine Vielzahl Wandausnehmungen (37) und Teleskopschussausnehmungen (38) ausgebildet sind, welche wahlweise miteinander fluchtend anordnenbar sind, derart, dass eine Vielzahl Erweiterungsstellungen (ES) einstellbar sind,
wobei eine erste Erweiterungsstellung (ES) einen kleineren Lastaufnahmeraum (LA) schafft als eine zweite Erweiterungsstellung (ES).

15. Lastenfahrrad (10),
mit einem Rahmen (13) und mit einer von dem Rahmen (13) getragenen Lastaufnahmevorrichtung (1),
wobei die Lastaufnahmevorrichtung (1) nach einem der vorgenannten Ansprüche ausgestaltet ist,
wobei vorzugsweise das Lastenfahrrad (10) in Long-John-Bauweise ausgestaltet ist, derart, dass die Lastaufnahmevorrichtung (1) in Fahrtrichtung (FR) des Lastenfahrrads (10) zwischen einem Lenkrohr (11) und einer Gabeleinheit (12) angeordnet ist.
